# EUROPEAN PATENT SPECIFICATION

(11) **EP 1 940 853 B1**
(45) Date of publication and mention of the grant of the patent: **04.11.2009**
(21) Application number: 06792145.2
(22) Date of filing: 19.09.2006
(51) Int. Cl.: C07F 7/18

(54) **PROCESS FOR PREPARING 1 -HYDROXY-2 -SUBSTITUTED CYCLOHEXYL AZETIDIN-2-ONE COMPOUNDS**
VERFAHREN ZUR HERSTELLUNG VON 1-HYDROXY-2-SUBSTITUIERTEN CYCLOHEXYLAZETIDIN-2-ON-VERBINDUNGEN
PROCÉDÉ SERVANT À PRÉPARER DES COMPOSÉS 1 -HYDROXY-2 -SUBSTITUANT-CYCLOHEXYLAZÉTIDIN-2-ONE

(30) Priority: 21.09.2005 SI 200500269
(43) Date of publication of application: 09.07.2008
(73) Proprietor: LEK Pharmaceuticals d.d., 1526 Ljubljana (SI)
(72) Inventor: SELIC, Lovro, 3000 Celje (SI); VILFAN, Gregor, 1000 Ljubljana (SI); URLEB, Uros, 1000 Ljubljana (SI)
(74) Representative: Kröger, Bernd
(86) International application number: PCT/EP2006/009101
(87) International publication number: WO 2007/039099

(56) References cited:
- MARCHIORO, CARLA ET AL: "Synthesis and NMR studies of key intermediates to a new class of .beta.-lactam: the trinems" JOURNAL OF THE CHEMICAL SOCIETY, PERKIN TRANSACTIONS 1: ORGANIC AND BIO-ORGANIC CHEMISTRY , (4), 463-468 CODEN: JCPRB4; ISSN: 0300-922X, 1997, XP002411819 cited in the application
- BIONDI, STEFANO ET AL: "Highly diastereoselective synthesis of 4-N-methylformamidino trinem (GV 129606), a potent antibacterial agent" TETRAHEDRON , 56(31), 5649-5655 CODEN: TETRAB; ISSN: 0040-4020, 2000, XP002411820
- BERTANI, BARBARA ET AL: "The synthesis of 4-aminocarbonylmethoxy trinems" TETRAHEDRON , 53(44), 15011-15028 CODEN: TETRAB; ISSN: 0040-4020, 1997, XP002411821
- ANDREOTTI, DANIELE ET AL: "Synthesis and biological evaluation of 4-alkoxy substituted trinems. Part I" BIOORGANIC & MEDICINAL CHEMISTRY LETTERS , 6(16), 2019-2024 CODEN: BMCLE8; ISSN: 0960-894X, 1996, XP002411822 cited in the application

## Description

The present invention belongs to the field of heterocyclic chemistry and relates to a novel process for the preparation of 1'-hydroxy-2'-substituted cyclohexyl azetidin-2-ones, which are important intermediates in the synthesis of trinems, a new family of totally synthetic β-lactam antibiotics.

C. Marchioro et al., J. Chem. Soc., Perkin Trans. 1, 1997, 463-468 describes epoxide ring opening of (3*S*,4*R*)-3-[(1*R*)-1-(*tert*-butyldimethylsilyloxy)ethyl]-4-[(1'*R*,2'*S*,3'*R*)-1',2'-epoxycyclohexan-3'-yl]azetidin-2-one (hereinafter referred to compound 1), starting from the commercially available derivative of 4-acetoxyazetidinone, in methanol using p-toluene sulfonic acid monohydrate as a catalyst resulting (3*S*)-3-((*R*)-1-(*tert*-butyldimethylsilyloxy)ethyl)-4-((1*R*,2*S*,3*S*)-2-hydroxy-3-methoxycyclohexyl) azetidin-2-one (hereinafter referred to compound 2a) in 65% yield. The said compound is an important intermediate in the synthesis of trinems.

D. Andreotti et al., Bioorg. & Med. Chem. Lett., Vol. 6, No. 16, pp. 2019-2024, 1996 describes regioselective epoxide ring opening of the above compound 1, using ethylene glycol and dichloromethane 20 : 1 as solvent in the presence of catalitic amount of p-toluenesulphonic acid, the corresponding alcohol was obtained and then directly converted into the corresponding silylated compound using *tert*-butylsilyl chloride and imidazole in dimethylformamide as solvent in 75% overall yield.

Surprisingly, the present inventors have found a novel process for the preparation of various 1'-hydroxy-2'-substituted cyclohexyl azetidin-2-one of general formula 2 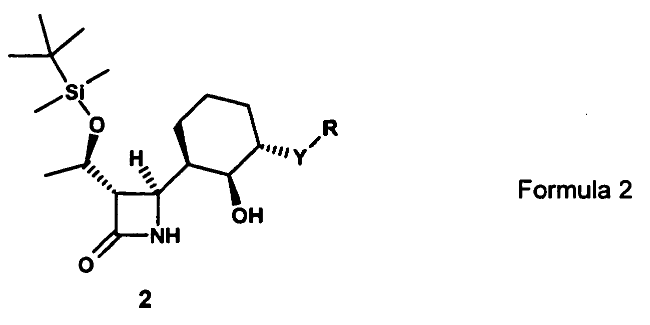 wherein
Y is O, S or NH;
R is hydrogen, or selected from a) phenyl group optionally substituted by one or two substituents each selected from nitro, halo, C₁-C₄ alkyl, C₁-C₄ alkoxy, hydroxy, trifluoromethyl and cyano, b) a 1- or 2-naphthyl group, and c) oxyranyl, aziridinyl, pirolyl, imidazolyl, pyrazolyl, furanyl, thiophenyl, thiazolyl, isothiazolyl, triazolyl, tetrazolyl, oxazolyl, isooxazolyl, azepinyl, pyridinyl, pyrimidinyl, pyrazinyl, pyridazinyl, triazinyl, pyranyl and their hydrogenated analogs, unsubstituted or optionally substituted by one or two substituents each selected from nitro, nitroso, amino, imino, sulfonyl, chlorosulfonyl, halo, C₁-C₄ alkyl, C₁-C₄ alkoxy, C₁-C₄ alkoxycarbonyl, C₁-C₄ alkylthio, C₁-C₄ alkylthiocarbonyl, hydroxy, trifluoromethyl, carboxyaldehyde or cyano group; or R₁(CHₘ)ₙ- group where n is an integer from 1 to 11, m is an integer from 1 to 2 and R₁ is a) hydrogen, halo, hydroxy, ciano, C₁-C₄ alkoxy, C₁-C₄ alkoxycarbonyl, nitro, nitroso, amino, imino, sulfonyl, chlorosulfonyl, C₁-C₄ alkylthio, Cₗ-C₄ alkylthiocarbonyl; or b) C₁-C₆ alkyl, C₂-C₆ alkenyl, C₃-C₇ cycloalkyl, optionally substituted by one or two substituents each selected from halo, hydroxy, ciano, carboxyaldehyde, C₁-C₄ alkoxy, C₁-C₄ alkoxycarbonyl, nitro, nitroso, amino, imino, sulfonil, chlorosulfonyl, C₁-C₄ alkylthio, C₁-C₄ alkylthiocarbonyl group;
in moderate to excellent yield by epoxide ring opening of (3*S*,4*R*)-3-[(1*R*)-1-(*tert-*butyldimethylsilyloxy)ethyl]-4-[(1'*R*,2'*S*,3'*R*)-1',2'-epoxycyclohexan-3'-yl]azetidin-2-one (compound of formula 1) 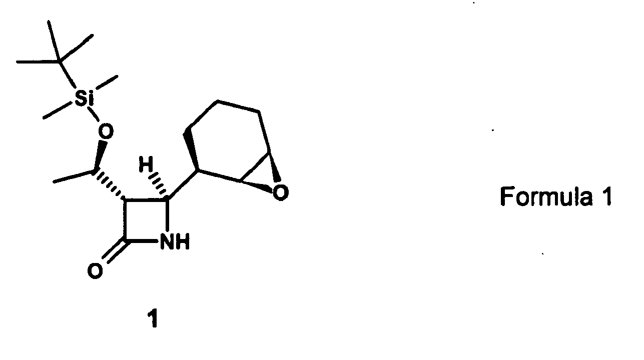 with the nucleophile compound of general formula 4

RYH Formula 4

wherein Y and R are as defined above
where nucleophile if in a form of liquid can act as a solvent itself, in a suitable solvent and in the presence of a suitable catalyst under ultrasonic irradiation of the reaction mixture, as illustrated by the following scheme 1:

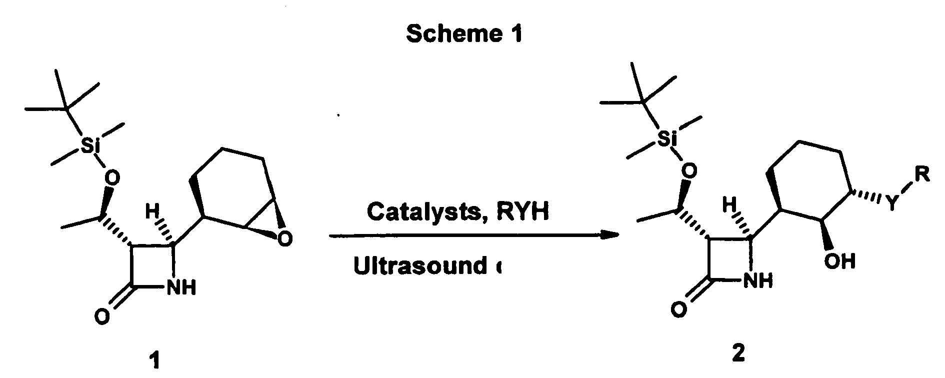

(3*S*,4*R*)-3-[(1*R*)-1-(*tert*-butyldimethylsilyloxy)ethyl]-4-[(1'*R*,2*S*,3'*R*)-1',2'-epoxycyclohexan-3'-yl]azetidin-2-one (compound of formula 1) as starting compound may be prepared according to the description in article of C. Marchioro et al., J. Chem. Soc., Perkin Trans. 1, 1997, 463-468.

A suitable solvent medium may be nucleophile itself if in the form of liquid or may comprise water, C₁-C₆ alcohol, e.g. methanol, ethanol, *n*-propanol, *iso*-propanol, *n-*butanol, *sec*-butanol, *iso*-butanol, *tert*-butanol, *N,N*-dimethylformamide, *N,N-*dimethylacetamide, acetonitrile, tetrahydrofuran (THF), dioxane, 1-methylpyrrolidinone, 1,3-dimethyl-3,4,5,6-tetrahydro-2(1H)-pyrimidone, dichloromethane, dimethylsulfoxide, liquid lower C₁-C₄ alkyl acetate, e.g. ethyl acetate, aromatic hydrocarbon, e.g. toluene, benzene, or mixtures thereof.

A suitable catalyst comprise Lewis acid, preferably salt of trifluoromethanesulfonic acid, more preferably ytterbium (III) triflate, stannous (II) triflate and dysprosium (III) triflate.

Reaction may be performed under ultrasonic irradiation of the reaction mixture.

In a preferred embodiment the reaction may be performed in an ultrasonic bath without heating. However, the temperature of a reaction mixture rises spontaneously from about room temperature to about 60°C. The reaction may be performed in the frequency range from 20 to 80 kHz, preferably from 30 to 50 kHz.

During the reaction process the suitable catalyst may be added to the reaction mixture which is immersed in the ultrasonic bath, e.g. for about 1 hour. If reaction is not completed another portion of the catalyst is added to the reaction mixture and placed for another period, e.g. for about 1 hour, in the ultrasonic bath. The process may be repeated until conversion is completed. Generaly, two to four times of adding the catalyst in immersing the reaction mixture in the ultrasonic bath is necessary to complete the conversion. Larger portions of catalyst and/or longer reaction time instead of multiple addition do not lead to total conversion of starting compound.

After the completing of the process the reaction mixture is evaporated and the resulted product may be purified by the common technique, e.g. by extraction and/or crystallisation or precipitation by means of organic non-polar solvent, e.g. pentane, hexane, heptane, di-C₁-C₄ alkyl ethers, ethyl acetate, and petroleum ether.

In a preferred embodiment the compound of formula 1 is converted with the suitable C₁-C₄ alcohol, e.g. methanol, ethanol, *n*-propanol, *iso*-propanol, *n*-butanol, *iso-*butanol, as nucleophilic compound, and several additions, e.g. four additions, of ytterbium (III) triflate as the catalyst to the reaction mixture immersed in the ultrasonic bath.

On the basis of the ultrasonic irradiation of the reaction mixture a significally improved yields of 1'-hydroxy-2'-substituted cyclohexyl azetidin-2-one of general formula 2 in comparision with the prior art processes may be obtained.

The above described process may be performed according to a further aspect of the invention, where instead of using compound of formula 1 a compound of the following formula 3 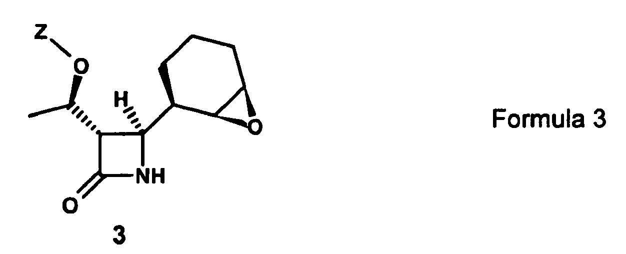 may be used as starting compound, wherein
Z is another suitable hydroxy protecting group. Thus the group -OZ may be an ether or an acyloxy group known in the art, for example as described in the textbook T.W.Greene and P.G.M.Wuts, Protective Groups in Organic Synthesis, 3rd Ed., 1999, under the heading "Protection for the Hydroxyl Group, Ethers, 23-244, Esters, 149-210 or as summarized in Reaction Chart 1. Protection for Hydroxyl group: Ethers 712-715 and Reaction Chart 2. Protection for Hydroxyl Group: Esters 712-715".

Examples of particularly suitable ethers include those in which Z is a hydrocarbosilyl group such as tri(C₁-C₆)alkylsilyl, e.g. trimethyl silyl. In the above starting compound of formula 1 a particularly convenient hydroxy protection group is *tert*butyldimethylsilyl.

The invention is illustrated by the following examples. All temperatures are given in degree Celsius and are uncorrected.

### Example 1

General method for the preparation of compound of formula 2 using ultrasonic irradiation. Experiments are performed in a Cole-Parmer 8890 ultrasonic bath.

### Preparation of (3S)-3-((R)-1-(tert-butyldimethylsilyloxy)ethyl)-4-((1R,2S,3S)-2-hydroxy-3-methoxycyclohexyl)azetidin-2-one (compound 2a)

To a solution of 372 mg (1.14 mmol) of (3*S*,4*R*)-3-[(1*R*)-1-(*tert-*butyldimethylsilyloxy)ethyl]-4-[(1'*R*,2'*S*,3'*R*)-1',2'-epoxycyclohexan-3'-yl]azetidin-2-one (compound 1) in methanol (3ml), a portion (21 mg, 3 mol%) of ytterbium (III) trifluoromethane sulfonate is added, a solution is immersed for 60 min into ultrasonic bath at frequency output 42 kHz. Then another portion of ytterbium (III) trifluoromethane sulfonate is added and immersed for 60 min into ultrasonic bath. This is repeated two more times (4 x cumulative). Reaction mixture is concentrated *in vacuo*, oily residue is dissoloved in ethyl acetate and the obtained solution washed with saturated ammonium chloride solution, dried over MgSO₄ and evaporated. The obtained white substance is crystallized from hexane to give 343 mg (84%) of the title compound .
m.p. 146-148°C (from hexane)
¹H NMR (300 MHz, CDCl₃): δ 0.08 (s, 6H), 0.88 (s, 9H), 1.27 (d, *J*= 6.2 Hz, 3H), 1.25-1.93 (m, 8H), 2.95 (m, 1H), 3.33 (s, 3H), 3.34 (m, 1H), 3.64 (dd, *J*= 2.1, 6.8 Hz, 1H) 3.81 (m, 1H), 4.17 (m, 1H), 6.02 (bs, 1 H).
¹³C NMR (300 MHz, CDCl₃): δ -4.6, -4.3, 18.0, 19.1, 21.5, 22.7, 23.7, 25.8 (3), 39.9, 53.7, 56.3, 61.8, 66.3, 69.9, 79.1, 169.0

According to the above general method the following compounds using ultrasonic irradiation are prepared:

### Example 2

### Preparation of (3S)-3-((R)-1-(tert-butyldimethylsilyloxy)ethyl)-4-((1R,2S,3S)-2-hydroxy-3-ethoxycyclohexyl) azetidin-2-one (compound 2b)

Instead of using methanol as in example 1, ethanol is used as a nucleophilic compound resulting the title compound in 75% yield. 4 x 3 mol% Yb(OTf)₃ is used as a catalyst.
m.p. 136-138°C (from hexane)
MS, (M+H)⁺=372 m/z.
IR (KBr): 3447, 3281, 2934, 2857, 1760, 1714, 1256, 1142, 1106, 1085, 962, 836, 776 cm⁻¹.
¹H NMR (300 MHz, DMSO-d₆): δ 0.09 (s, 6H), 0.89 (s, 9H), 1.18 (t, J= 7.0 Hz, 3H), 1.28 (d, *J*= 6.2 Hz, 3H), 1.45-1.91 (m, 8H), 2.96 (m, 1H), 3.42 (m, 2H), 3.56 (m, 1 H), 3.64 (dd, *J*= 2.2 Hz, *J*= 6.7 Hz, 1H), 3.85 (m, 1 H), 4.18 (m, 1H), 5.91 (bs, 1H).
¹³C NMR (300 MHz, CDCl₃): δ -4.7, -4.3, 15.6, 18.0, 19.2, 21.5, 22.8, 24.5, 25.8, 33.8, 54.0, 61.7, 63.9, 66.5, 70.6, 77.2, 168.9.

### Example 3

### Preparation of (3S)-3-((R)-1-(tert-butyldimethylsilyloxy)ethyl)-4-((1R,2S,3S)-2-hydroxy-3-propoxycyclohexyl)azetidin-2-one (compound 2c)

Instead of using methanol as in example 1, n-propanol is used as a nucleophilic compound resulting the title compound in 69% yield. 3 x 2.5 mol% Yb(OTf)₃ is used as a catalyst.
m.p. 119-121°C (from hexane).
MS, (M+H)⁺=386 m/z.
IR (KBr): 3449, 3293, 2935, 2858, 1756, 1715, 1255, 1106, 1087, 969, 837, 776 cm⁻¹. ¹H NMR (300 MHz, CDCl₃): δ 0.06 (s, 6H), 0.86 (s, 9H), 0.88 (t, *J*= 7.4 Hz, 3H), 1.24 (d, *J*= 6.2 Hz, 3H), 1.41-1.58 (m, 7H), 1.64 (m, 1H), 1.85 (m, 1H), 2.38 (bs, 1H), 2.91 (m, 1H), 3.30 (m, 1H), 3.40 (m, 2H), 3.62 (dd, *J*= 1.0 Hz, *J*=6.1 Hz, 1H), 3.81 (m, 1H), 4.13 (m, 6.2, 1H), 6.38 (bs, 1H).
¹³C NMR (300 MHz, CDCl₃): δ -4.7, -4.3, 10.7, 18.0, 19.2, 21.2, 22.7, 23.3, 24.3, 25.8, 39.5, 54.1, 61.6, 66.4, 70.2, 70.5, 77.3, 169.2.

### Example 4

### Preparation of (3S)-3-((R)-1-(tert-butyldimethylsilyloxy)ethyl)-4-((1R,2S,3S)-2-hydroxy-3-isopropoxycyclohexyl) azetidin-2-one (compound 2d)

Instead of using methanol as in example 1, *iso*-propanol is used as a nucleophilic compound resulting the title compound in 30% yield. 4 x 3 mol% Yb(OTf)₃ is used as a catalyst.
m.p. 121-123°C (from hexane)
MS, (M+H)⁺=386 m/z
IR (KBr): 3480, 3253, 2932, 1755, 1715, 1256, 1141, 1060, 966, 831, 775 cm⁻¹.
¹H NMR 8300 MHz, CDCl₃): δ 0.09 (s, 6H), 0.89 (s, 9H), 1.12 (d, *J*= 6.4 Hz, 3H), 1.14 (d, *J*= 6.6 Hz, 3H), 1.28 (d, *J*= 6.1 Hz, 3H), 1.45-1.93 (m, 8H), 2.96 (dd, *J*= 1.4 Hz, *J*= 5.9 Hz, 1H); 3.48 (m, 1H), 3.61-3.72 (m, 2H), 3.77 (m, 1H), 4.18 (m, 1H), 6.04 (bs, 1H).
¹³C NMR (300 MHz, CDCl₃): δ -4.7, -4.3, 18.0, 19.3, 21.4, 22.3, 22.7, 23.0, 25.3, 25.8, 39.5, 54.0, 61.6, 66.4, 69.1, 71.2, 74.5, 169.2

### Example 5

### Preparation of (3S)-3-((R)-1-(tert-butyldimethylsilyloxy)ethyl)-4-((1R, 2S, 3S)-2-hydroxy-3-butoxycyclohexyl) azetidin-2-one (compound 2e)

Instead of using methanol as in example 1, n-butanol is used as a nucleophilic compound resulting the title compound in 89% yield. 3 x 4 mol% Yb(OTf)₃ is used as a catalyst.
m.p. 105-106°C (from hexane)
MS, (M+H)⁺= 400 m/z
IR (KBr): 3447, 3285, 2933, 2855, 1755, 1715, 1255, 1142, 1091, 965, 836, 776 cm⁻¹.
¹H NMR (300 MHz, CDCl₃): δ 0.10 (s, 6H), 0.90 (s, 9H), 0.92 (t, *J*= 7.2 Hz, 3H), 1.29 (d, *J*= 6.2 Hz, 3H), 1.33-1.73 (m, 1H), 1.88 (m, 1H), 2.96 (dd, *J*= 2.1 Hz, 6.1 Hz, 1H), 3.32-3.41 (m, 2H), 3.49 (m, 1H), 3.65 (dd, *J*= 2.2 Hz, *J*= 6.5 Hz, 1H), 3.85 (m, 1H), 4.18 (m, 1H), 5.92 (bs, 1H).
¹³C NMR (300 MHz, CDCl₃): δ -4.7, -4.3, 13.9, 18.0, 19.2, 21.2, 22.7, 24.3, 25.8, 32.3, 39.5, 54.1, 61.6, 66.4, 68.3, 70.5, 77.3, 169.2.

### Example 6

### Preparation of (3S)-3-((R)-1-(tert-butyldimethylsilyloxy)ethyl)-4-((1R,2S,3S)-3-(2-fluoroethoxy)-2-hydroxycyclohexyl) azetidin-2-one (compound 2f)

Instead of using methanol as in example 1, 2-fluoroethanol is used as a nucleophilic compound resulting the title compound in 53% yield. 2 x 1 mol% Yb(OTf)₃ is used as a catalyst.
m.p. 106-110°C (from hexane)
MS, (M+H)⁺=390 m/z.
IR (KBr): 3409, 2931, 2861, 1755, 1739, 1252, 1104, 1056, 964, 837, 776 cm⁻¹.
¹H NMR (300 MHz, CDCl₃): δ 0.10 (s, 6H), 0.89 (s, 9H), 1.28 (d, *J*= 6.2 Hz, 3H), 1.44-1.92 (m, 7H), 2.97 (m, 1H), 3.50 (m, 1H), 3.56-3.86 (m, 2H), 3.66 (dd, *J*= 2.3 Hz, *J*= 4.9 Hz, 1H), 3.90 (m, 1H), 4.45 (t, *J*= 4.2 Hz, 1H), 4.61 (t, *J*= 4.2 Hz, 1H), 5.98 (bs, 1H).
¹³C NMR (300 MHz, CDCl₃): δ -4.7, -4.3, 18.0, 19.0, 21.3, 22.7, 24.1, 25.8, 39.5, 54.0, 61.5, 66.4, 67.8 (*J*^{19F13C} = 20 Hz), 70.1, 78.1, 83.2 (*J*^{19F13C} = 169 Hz), 169.1.

### Example 7

### Preparation of (3S)-3-((R)-1-(tert-butyldimethylsilyloxy)ethyl)-4-((1R,2S,3S)-3-(2-chloroethoxy)-2-hydroxycyclohexyl) azetidin-2-one (compound 2g)

Instead of using methanol as in example 1, 2-chloroethanol is used as a nucleophilic compound resulting the title compound in 47% yield. 3 x 3 mol% Yt(OTf)3 is used as a catalyst.
m.p. 97-100°C (from hexane)
MS, (M+H)⁺= 406 m/z.
IR (KBr): 3440, 2933, 2858, 1757, 1714, 1256, 1106, 1057, 964, 837, 776 cm⁻¹.
¹H NMR (300 MHz, CDCl₃): δ 0.07 (s, 6H), 0.87 (s, 9H), 1.25 (d, *J*= 6.2 Hz, 3H), 1.43-1.51 (m, 5H), 1.68 (m, 1H), 1.88 (m, 1H), 2.37 (bs, 1H), 2.94 (m, 1H), 3.48 (m, 1H), 3.55-3.65 (m, 4H), 3.75 (m, 1H), 3.86 (m, 1H), 4.15 (d, *J*= 6.2, 1H), 6.29 (bs, 1H).
¹³C NMR (300 MHz, CDCl₃): δ -4.8, -4.4, 17.9, 19.0, 21.2, 22.6, 24.3, 25.7, 39.5, 43.1, 53.9, 61.6, 66.3, 68.8, 70.1, 78.0, 169.0.

### Example 8

### Preparation of 3-((1S,2S,3R)-3-((3S)-3-((R)-(tert-butyldimethylsilyloxy)ethyl)-4-oxoazetidin-2-yl)-2-hydroxycyclohexyloxy)propanenitrile (compound 2h)

Instead of using methanol as in example 1, 3-hydroxypropionitrile is used as a nucleophilic compound resulting the title compound in 55% yield. 3 x 10 mol% Sn(OTf)₂ is used as a nucleophile.
m.p. 133-135°C (from hexane)
MS, (M+H)⁺= 397 m/z.

IR (KBr): 3508, 3153, 3088, 2935, 2260, 1756, 1708, 1250, 1138, 1102, 1053, 964, 837, 777 cm⁻¹.
¹H NMR (300 MHz, CDCl₃): δ 0.10 (s, 6H), 0.90 (s, 9H), 1.30 (d, *J*= 6.1 Hz, 3H), 1.48-1.92 (m, 8H), 2.60 (t, *J*= 6.2 Hz, 2H), 2.98 (dd, *J*= 6.3 Hz, 1H), 3.53 (m, 1H), 3.62 (m, 2H), 2.78 (m, 1H), 3.90 (m, 1H), 4.18 (m, 1H), 5.91 (bs, 1H).
¹³C NMR (300 MHz, CDCl³): δ -4.7, -4.3, 18.0, 19.1, 19.3, 20.1, 22.7, 23.9, 25.8, 39.3, 54.0, 61.4, 63.3, 66.4, 70.0, 78.2, 118.0, 169.2

The following table summarized obtained yields of the process according to the above described examples:

| Compound of general formula 2 | R | Yield(%) obtained by ultrasonic irradiation |
|---|---|---|
| a | -OMe | 84 |
| b | -OEt | 75 |
| c | -O-*n*Pr | 69 |
| d | -O-*iso*Pr | 30 |
| e | -O-*n*Bu | 89 |
| f | -OCH2CH2F | 53 |
| g | -OCH2CH2Cl | 47 |
| h | -OCH2CH2CN | 55 |

## Claims

1. A process for the preparation of 1'-hydroxy-2'-substituted cyclohexyl azetidin-2-one compound of the formula 2 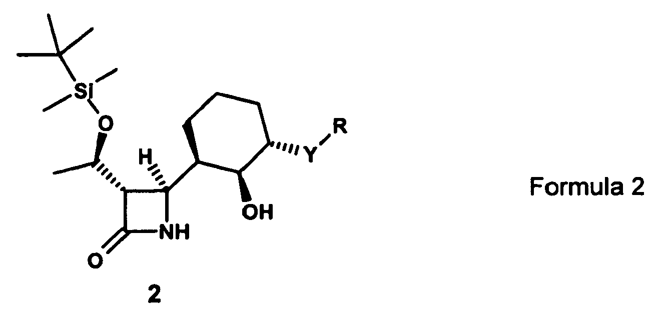 wherein
Y is O, S or NH;
R is hydrogen, or selected from a) phenyl group optionally substituted by one or two substituents each selected from nitro, halo, C₁-C₄ alkyl, C₁-C₄ alkoxy, hydroxy, trifluoromethyl, and cyano group, b) a 1- or 2- naphthyl group, and c) oxyranyl, aziridinyl, pirolyl, imidazolyl, pyrazolyl, furanyl, thiophenyl, thiazolyl, isothiazolyl, triazolyl, tetrazolyl, oxazolyl, isooxazolyl, azepinyl, pyridinyl, pyrimidinyl, pyrazinyl, pyridazinyl, triazinyl, pyranyl and their hydrogenated analogs, unsubstituted or optionally substituted by one or two substituents each selected from nitro, nitroso, amino, imino, sulfonyl, chlorosulfonyl, halo, C₁-C₄ alkyl, C₁-C₄ alkoxy, C₁-C₄ alkoxycarbonyl, C₁-C₄ alkylthio, C₁-C₄ alkylthiocarbonyl, hydroxy, trifluoromethyl, carboxyaldehyde or cyano group; or R₁(CHₘ)ₙ- group where n is an integer from 1 to 11, m is an integer from 1 to 2 and R₁ is a) hydrogen, halo, hydroxy, cyano, C₁-C₄ alkoxy, C₁-C₄ alkoxycarbonyl, nitro, nitroso, imino, sulfonyl, chlorosulfonyl, C₁-C₄ alkylthio, C₁-C₄ alkylthiocarbonyl, or b) C₁-C₆ alkyl, C₂-C₆ alkenyl, C₃-C₇ cycloalkyl, optionally substituted by one or two substituents each selected from halo, hydroxy, ciano, carboxyaldehyde, C₁-C₄ alkoxy, C₁-C₄ alkoxycarbonyl, nitro, nitroso, amino, imino, sulfonyl, chlorosulfonyl, C₁-C₄ alkylthio, C₁-C₄ alkylthiocarbonyl group,
which comprises reacting (3*S*,4*R*)-3-[(1*R*)-1-(*tert*-butyldimethylsilyloxy)ethyl]-4-[(1'*R*,2'*S*,3'*R*)-1',2'-epoxycyclohexan-3'-yl]azetidin-2-one of formula 1, 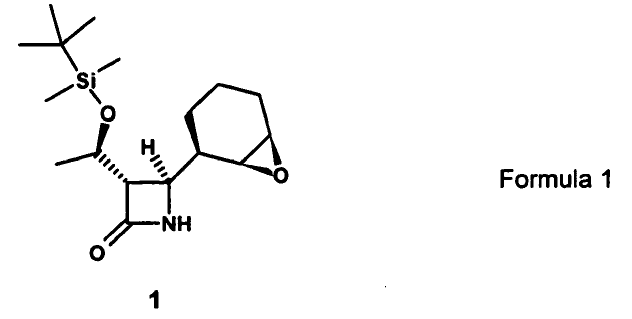 with the nucleophile compound of the formula 4
RYH Formula 4
wherein Y and R are as defined above,
which nucleophile if in a liquid form can act as a solvent itself, in a suitable solvent and in the presence of a suitable catalyst selected from the group of salt of trifluoromethanesulfonic acid under ultrasonic irradiation of reaction mixture and after completing the reaction the title compound is isolated and purified.

2. The process according to claim 1, wherein the solvent comprise water, C₁-C₆ alcohol, *N,N*-dimethylformamide, *N,N*-dimethylacetamide, acetonitrile, tetrahydrofuran, dioxane, 1-methylpyrrolidinone, 1,3-dimethyl-3,4,5,6-tetrahydro-2(1H)-pyrimidone, dichloromethane, dimethylsulfoxide, C₁-C₄ alkyl acetate or aromatic hydrocarbon, or mixtures thereof.

3. The process according to claims 1 and 2, wherein the solvent comprise methanol, ethanol, n-propanol, *iso*-propanol, n-butanol, or sec-butanol.

4. The process according to claim 1, wherein the catalyst comprise ytterbium (III) triflate, stannous (II) triflate and dysprosium (III) triflate.

5. The process according to claim 1, wherein ultrasonic irradiation is in the frequency range from 20 to 80 kHz.

6. The process according to claims 1 and 5, wherein ultrasonic irradiation is in the frequency range from 30 to 50 kHz.

7. A process according to any of the previous claims, which comprise the use of the compoud of the formula 3 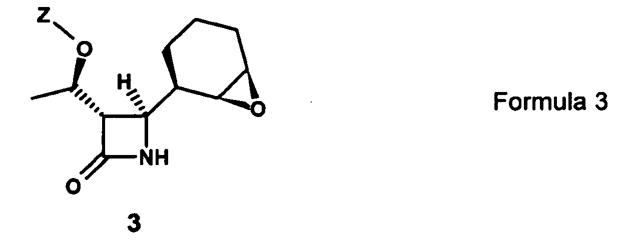 as starting compound instead of the compound of formula 1,
wherein Z is any suitable hydroxy protecting group.

## Patentansprüche

1. Verfahren zur Herstellung einer 1'-Hydroxy-2'-substituiertes Cyclohexyl-azetidin-2-on-Verbindung der Formel 2 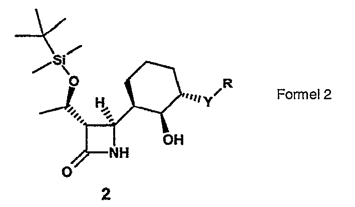 worin Y für O, S oder NH steht,
R für Wasserstoff steht oder aus a) einer Phenylgruppe, die optional durch einen oder zwei Substituenten substituiert ist, die jeweils aus einer Nitro-, Halogen-, C₁-C₄-Alkyl-, C₁-C₄-Alkoxy-, Hydroxy-, Trifluormethyl- und Cyanogruppe ausgewählt sind, b) einer 1- oder 2-Naphthylgruppe und c) Oxyranyl, Aziridinyl, Pirolyl, Imidazolyl, Pyarzolyl, Furanyl, Thiophenyl, Thiazolyl, Isothiazolyl, Triazolyl, Tetrazolyl, Oxazolyl, Isooxazolyl, Azepinyl, Pyridinyl, Pyrimidinyl, Pyrazinyl, Pyridazinyl, Triazinyl, Pyranyl und den hydrierten Analogen hiervon, die nicht substituiert oder optional durch einen oder zwei Substituenten substituiert sind, die jeweils aus einer Nitro-, Nitroso-, Amino-, Imino-, Sulfonyl-, Chlorsulfonyl-, Halogen-, C₁-C₄-Alkyl-, C₁-C₄-Alkoxy-, C₁-C₄-Alkoxycarbonyl-, C₁-C₄-Alkylthio-, C₁-C₄-Alkylthiocarbonyl-, Hydroxy-, Trifluormethyl-, Carboxyaldehyd- oder Cyanogruppe ausgewählt sind, ausgewählt ist oder für eine R₁(CHₘ)ₙ-Gruppe steht, worin n für eine ganze Zahl von 1 bis 11 steht, m für eine ganze Zahl von 1 bis 2 steht und R₁ für a) Wasserstoff, Halogen, Hydroxy, Cyano, C₁-C₄-Alkoxy, C₁-C₄-Alkoxycarbonyl, Nitro, Nitroso, Imino, Sulfonyl, Chlorsulfonyl, C₁-C₄₋Alkylthio, C₁-C₄-Alkylthiocarbonyl oder b) C₁-C₆-Alkyl, C₂-C₆-Alkenyl, C₃-C₇-Cycloalkyl, die optional durch einen oder zwei Substituenten substituiert sind, die jeweils aus einer Halogen-, Hydroxy-, Cyano-, Carboxyaldehyd-, C₁-C₄-Alkoxy-, C₁-C₄-Alkoxycarbonyl-, Nitro-, Nitroso-, Amino-, Imino-, Sulfonyl-, Chlorsulfonyl-, C₁-C₄-Alkylthio-, C₁-C₄-Alkylthiocarbonylgruppe ausgewählt sind, steht,
wobei das Verfahren ein Umsetzen eines (3S,4R)-3-[(1R)-1-(tert-Butyldimethylsilyloxy)-ethyl]-4-[(1'R,2'S,3'R)-1',2'-epoxycyclohexan-3'-yl]-azetidin-2-ons der Formel 1 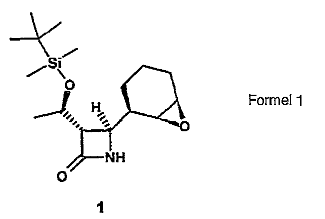 mit einer nucleophilen Verbindung der Formel 4
RYH Formel 4
worin Y und R die oben angegebene Bedeutung besitzen,
wobei das Nucleophil, wenn es sich in einer flüssigen Form befindet, als Lösemittel selbst wirken kann, in einem geeigneten Lösemittel und in Gegenwart eines geeigneten Katalysators, der aus der Gruppe eines Salzes von Trifluormethansulfonsäure ausgewählt ist, unter Ultraschallbestrahlung des Reaktionsgemisches und nach Beendigen der Reaktion ein Isolieren und Reinigen der Titelverbindung umfasst.

2. Verfahren nach Anspruch 1, worin das Lösemittel Wasser, einen C₁-C₆-Alkohol, N,N-Dimethylformamid, N,N-Dimethylacetamid, Acetonitril, Tetrahydrofuran, Dioxan, 1-Methylpyrrolidinon, 1,3-Dimethyl-3,4,5,6-tetrahydro-2(1H)-pyrimidon, Dichlormethan, Dimethylsulfoxid, C₁-C₄-Alkylacetat oder einen aromatischen Kohlenwasserstoff oder Gemische hiervon umfasst.

3. Verfahren nach den Ansprüchen 1 und 2, worin das Lösemittel Methanol, Ethanol, n-Propanol, Isopropanol, n-Butanol oder sek-Butanol umfasst.

4. Verfahren nach Anspruch 1, worin der Katalysator Ytterbium(III)-triflat, Zinn(II)-triflat und Dysprosium(III)-triflat umfasst.

5. Verfahren nach Anspruch 1, worin die Ultraschallbestrahlung in einem Frequenzbereich von 20 bis 80 kHz liegt.

6. Verfahren nach den Ansprüchen 1 und 5, wobei die Ultraschallbestrahlung in einem Frequenzbereich von 30 bis 50 kHz liegt.

7. Verfahren nach einem der vorhergehenden Ansprüche, das die Verwendung der Verbindung der Formel 3 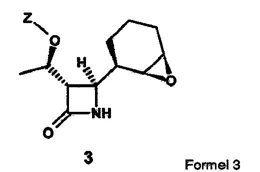 als Ausgangsmaterial anstelle der Verbindung der Formel 1 umfasst,
worin Z für eine beliebige geeignete Hydroxyschutzgruppe steht.

## Revendications

1. Procédé de préparation d'un composé 1'-hydroxy-cyclohexyl-azétidin-2-one substitué en position 2' de formule 2 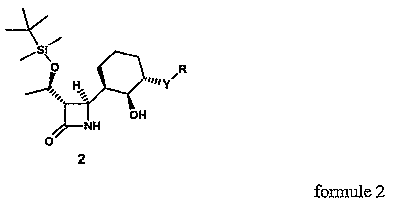 dans laquelle
Y représente O, S ou NH ;
R représente l'hydrogène ou est sélectionné parmi a) un groupe phényle éventuellement substitué par un ou deux substituant(s), chacun sélectionné parmi des groupes nitro, halo, alkyle en C₁ à C₄, alcoxy en C₁ à C₄, hydroxy, trifluorométhyle et cyano, b) un groupe 1- ou 2-naphtyle et c) des groupes oxyranyle, aziridinyle, pirolyle, imidazolyle, pyrazolyle, furanyle, thiophényle, thiazolyle, isothiazolyle, triazolyle, tétrazolyle, oxazolyle, isooxazolyle, azépinyle, pyridinyle, pyrimidinyle, pyrazinyle, pyridazinyle, triazinyle, pyranyle et leurs analogues hydrogénés, non substitués ou éventuellement substitués par un ou deux substituant(s), chacun sélectionné parmi les groupes nitro, nitroso, amino, imino, sulfonyle, chlorosulfonyle, halo, alkyle en C₁ à C₄, alcoxy en C₁ à C₄, alcoxycarbonyle en C₁ à C₄, alkylthio en C₁ à C₄, alkylthiocarbonyle en C₁ à C₄, hydroxy, trifluorométhyle, carboxyaldéhyde ou cyano ; ou un groupe R₁(CHₘ)ₙ, où n est un nombre entier de 1 à 11, m est un entier de 1 à 2 et R₁ représente a) l'hydrogène, un halo, un hydroxy, un cyano, un alcoxy en C₁ à C₄, un alcoxycarbonyle en C₁ à C₄, un nitro, un nitroso, un imino, un sulfonyle, un chlorosulfonyle, un alkyltbio en C₁ à C₄, un alkylthiocarbonyle en C₁ à C₄, ou b) un alkyle en C₁ à C₆, un alcényle en C₂ à C₆, un cycloalkyle en C₃ à C₇, éventuellement substitué par un ou deux substituant(s), chacun sélectionné parmi les groupes halo, hydroxy, cyano, carboxyaldéhyde, alcoxy en C₁ à C₄, alcoxycarbonyle en C₁ à C₄, nitro, nitroso, amino, imino, sulfonyle, chlorosulfonyle, alkylthio en C₁ à C₄, alkylthiocarbonyle en C₁ à C₄,
qui consiste à faire réagir une (3S,4R)-3-[(1R)-1-(tert-butyldiméthylsilyloxy)éthyl]-4-[(1'R,2'S,3'R)-1',2'-époxycyclohexan-3'-yl]azétidin-2-one de formule 1, 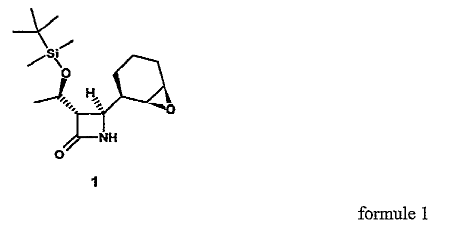 avec le composé nucléophile de formule 4
RYH formule 4
dans laquelle Y et R sont tels que définis précédemment,
le nucléophile, s'il se présente sous forme liquide, pouvant faire office de solvant lui-même, dans un solvant approprié et en présence d'un catalyseur approprié choisi dans le groupe constitué d'un sel d'acide trifluorométhanesulfonique, sous irradiation par ultrason du mélange réactionnel, le composé du titre, après achèvement de la réaction, pouvant être isolé et purifié.

2. Procédé selon la revendication 1, dans lequel le solvant comprend l'eau, un alcool en C₁ à C₆, le N,N-diméthylformamide, le N,N-diméthylacétamide, l'acétonitrile, le tétrahydrofurane, le dioxane, la 1-méthylpyrrolidinone, la 1,3-diméthyl-3,4,5,6-tétrahydro-2(1H)-pyrimidone, le dichlorométhane, le diméthylsulfoxyde, l'acétate d'alkyle en C₁ à C₄, ou un hydrocarbure aromatique, ou encore des mélanges de ceux-ci.

3. Procédé selon les revendications 1 et 2, dans lequel le solvant comprend le méthanol, l'éthanol, le n-propanol, l'isopropanol, le n-butanol ou le sec-butanol.

4. Procédé selon la revendication 1, dans lequel le catalyseur comprend le triflate d'ytterbium (III), le triflate d'étain (II) et le triflate de dysprosium (III).

5. Procédé selon la revendication 1, dans lequel l'irradiation par ultrason est comprise dans la plage allant de 20 à 80 kHz.

6. Procédé selon les revendications 1 et 5, dans lequel l'irradiation par ultrason est comprise dans la plage allant de 30 à 50 kHz.

7. Procédé selon l'une quelconque des revendications précédentes, comprenant l'utilisation du composé de formule 3 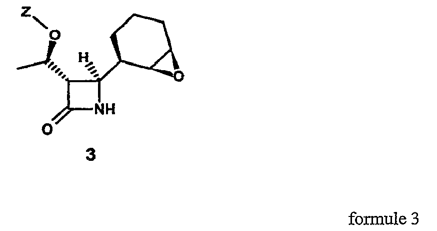 en tant que composé de départ à la place du composé de formule 1, dans lequel Z représente n'importe quel groupe protecteur du groupe hydroxy approprié.
